# EUROPÄISCHE PATENTSCHRIFT

(11) **EP 3 405 381 B1**
(45) Veröffentlichungstag und Bekanntmachung des Hinweises auf die Patenterteilung: **06.07.2022**
(21) Anmeldenummer: 17702021.1
(22) Anmeldetag: 19.01.2017
(51) Int. Cl.: B62D 15/02, B60W 30/06

(54) **VERFAHREN ZUM AUSPARKEN EINES KRAFTFAHRZEUGS AUS EINER PARKLÜCKE MIT ZUMINDEST SEMI-AUTONOMEM MANÖVRIEREN DES KRAFTFAHRZEUGS BIS ZU EINER ENDPOSITION, FAHRERASSISTENZSYSTEM SOWIE KRAFTFAHRZEUG**
METHOD FOR MOVING A MOTOR VEHICLE OUT OF A PARKING SPACE WITH AT LEAST SEMI-AUTONOMOUS MANOEUVRING OF THE MOTOR VEHICLE UP TO AN END POSITION, DRIVER ASSISTANCE SYSTEM AND MOTOR VEHICLE
PROCÉDÉ PERMETTANT DE FAIRE SORTIR UN VÉHICULE AUTOMOBILE D'UN EMPLACEMENT DE STATIONNEMENT À L'AIDE DE MAN UVRES AU MOINS SEMI-AUTONOMES DU VÉHICULE AUTOMOBILE JUSQU' À UNE POSITION FINALE, SYSTÈME D'AIDE À LA CONDUITE ET VÉHICULE AUTOMOBILE

(30) Priorität: 21.01.2016 DE 102016100993
(43) Veröffentlichungstag der Anmeldung: 28.11.2018
(73) Patentinhaber: Valeo Schalter und Sensoren GmbH, 74321 Bietigheim-Bissingen (DE)
(72) Erfinder: JOOS, Malte, 74321 Bietigheim-Bissingen (DE); MAHMOUD, Mohamed, 74321 Bietigheim-Bissingen (DE); BLINKLE, Frank, 74321 Bietigheim-Bissingen (DE)
(74) Vertreter: Pothmann, Karsten
(86) Internationale Anmeldenummer: PCT/EP2017/051047
(87) Internationale Veröffentlichungsnummer: WO 2017/125471

(56) Entgegenhaltungen:
- DE-A1-102010 030 208
- DE-A1-102013 223 417
- GB-A- 2 493 446
- JP-A- 2015 131 644

## Beschreibung

Die vorliegende Erfindung betrifft ein Verfahren zum Ausparken eines Kraftfahrzeugs aus einer Querparklücke, bei welchem das Kraftfahrzeug entlang einer Ausparktrajektorie zumindest semi-autonom aus der Querparklücke heraus auf eine an die Querparklücke angrenzende Fahrbahn manövriert wird, wobei bei diesem semi-autonomen Manövrieren des Kraftfahrzeugs entlang der Ausparktrajektorie zumindest ein Rückwärtsfahrzug durchgeführt wird, eine Endposition bestimmt wird und das semi-autonome Manövrieren des Kraftfahrzeugs entlang der Ausparktrajektorie an der Endposition beendet wird. Darüber hinaus betrifft die vorliegende Erfindung ein Fahrerassistenzsystem für ein Kraftfahrzeug. Schließlich betrifft die vorliegende Erfindung ein Kraftfahrzeug.

Fahrerassistenzsysteme werden dazu verwendet, den Fahrer beim Führen des Kraftfahrzeugs zu unterstützen. Aus dem Stand der Technik sind beispielsweise Fahrerassistenzsysteme bekannt, die den Fahrer beim Einparken des Kraftfahrzeugs in eine Parklücke und/oder beim Ausparken aus der Parklücke unterstützen. Hierbei kann das Kraftfahrzeug semi-autonom manövriert werden. Dabei kann es vorgesehen sein, dass das Fahrerassistenzsystem einen Eingriff in die Lenkung des Kraftfahrzeugs vornimmt. Der Fahrer des Kraftfahrzeugs betätigt weiterhin das Gaspedal und die Bremse. Es sind auch Fahrerassistenzsysteme bekannt, die das Kraftfahrzeug vollautonom manövrieren. In diesem Fall übernimmt das Fahrerassistenzsystem auch den Eingriff in eine Bremsanlage und einen Antriebsmotor des Kraftfahrzeugs.

Das Interesse richtet sich vorliegend insbesondere auf das Ausparken aus einer Querparklücke, bei dem das Kraftfahrzeug aus der Querparklücke heraus in Rückwärtsfahrtrichtung bewegt wird. Hierzu beschreibt die DE 10 2011 080 148 A1 ein Verfahren, bei dem seitliche Begrenzungslinien der Querparklücke bestimmt werden. Danach wird eine Kurvenrichtung für ein Ausparkmanöver festgelegt. Ferner wird ein Rückwärtsfahrzug in Abhängigkeit von Objekten, die die Querparklücke begrenzen, bestimmt. Darüber hinaus ist es vorgesehen, dass das Kraftfahrzeug am Ende des Einparkmanövers in der gewünschten Fahrtrichtung ausgerichtet wird. Bevorzugt sind das Kraftfahrzeug als auch der Lenkeinschlag nach dem Abschluss des Ausparkvorgangs so ausgerichtet, dass sich das Kraftfahrzeug geradeaus entlang der Fahrspur bewegt.

Die GB 2 493 446 A zeigt ein Verfahren zum Ausparken eines Fahrzeugs gemäß Oberbegriff des Anspruchs 1. Die DE 10 2010 030208 A1, JP 2015 131644 A und DE 10 2013 223417 A1 zeigen weitere Verfahren zum Ausparken eines Fahrzeugs.

Es ist Aufgabe der vorliegenden Erfindung, eine Lösung aufzuzeigen, wie ein Ausparkmanöver aus einer Querparklücke, bei dem das Kraftfahrzeug zumindest semi-autonom manövriert wird, sicherer durchgeführt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

Ein erfindungsgemäßes Verfahren dient zum Ausparken eines Kraftfahrzeugs aus einer Querparklücke. Hierbei wird das Kraftfahrzeug entlang einer Ausparktrajektorie zumindest semi-autonom aus der Querparklücke heraus auf eine an die Querparklücke angrenzende Fahrbahn manövriert, wobei bei diesem semi-autonomen Manövrieren des Kraftfahrzeugs entlang der Ausparktrajektorie zumindest ein Rückwärtsfahrzug durchgeführt wird. Darüber hinaus wird eine Endposition bestimmt und das semi-autonome Manövrieren des Kraftfahrzeugs entlang der Ausparktrajektorie wird an der Endposition beendet. Ferner ist es vorgesehen, dass die Endposition als zumindest derartige Position bestimmt wird, dass beim ab der Endposition erfolgenden weiteren Fortbewegen des Kraftfahrzeugs ein manuelles Führen des Kraftfahrzeugs durch einen Fahrzeugführer in eine durch die Fahrbahn vorgegebene Fahrtrichtung ohne Rangieren des Kraftfahrzeugs in einem Vorwärtsfahrzug durchgeführt werden kann.

Vorliegend soll das Kraftfahrzeug zumindest semi-autonom aus einer Querparklücke ausgeparkt werden. Dies kann mit Hilfe eines entsprechenden Fahrerassistenzsystems des Kraftfahrzeugs erfolgen. Mit dem Fahrerassistenzsystem soll der Fahrzeugführer bzw. der Fahrer des Kraftfahrzeugs beim Ausparken aus der Querparklücke unterstützt werden. Die Querparklücke dient zum Querparken bzw. zur Senkrechtaufstellung des Kraftfahrzeugs. Hierbei wird das Kraftfahrzeug in einem Winkel von etwa 90° zu der Fahrtrichtung der Fahrbahn, die an die Querparklücke angrenzt, aufgestellt. Vorliegend gilt das Interesse Ausparkvorgängen, bei denen das Kraftfahrzeug rückwärts aus der Querparklücke herausbewegt wird. Dies ist der Fall, wenn das Kraftfahrzeug vorwärts in die Querparklücke eingeparkt wurde.

Zum Durchführen des Ausparkvorgangs wird das Kraftfahrzeug zumindest semi-autonom manövriert. Dies bedeutet, dass beispielsweise von dem Fahrerassistenzsystem in die Lenkung eingegriffen wird. Es kann weiterhin dem Fahrzeugführer überlassen bleiben, das Gaspedal und die Bremse zu betätigen. Bevorzugt ist es aber vorgesehen, dass das Kraftfahrzeug während des Ausparkvorgangs vollautonom manövriert wird. Dies bedeutet, dass das Fahrerassistenzsystem in die Lenkung des Kraftfahrzeugs, die Bremsanlage und den Antriebsmotor eingreift. Während des Ausparkens wird das Kraftfahrzeug von einer Parkposition in der Querparklücke heraus auf die Fahrbahn manövriert, die an die Querparklücke angrenzt. Hierbei wird das Kraftfahrzeug entlang der Ausparktrajektorie manövriert. Die Ausparktrajektorie kann grundsätzlich vorbestimmt sein. Die Ausparktrajektorie kann auch anhand von Objekten, die die Querparklücke begrenzen, bestimmt werden. Es kann auch vorgesehen sein, dass die Ausparktrajektorie anhand von Sensordaten, die mit Sensoren des Kraftfahrzeugs erfasst werden, beim Ausparken des Kraftfahrzeugs angepasst wird. Dabei ist es vorgesehen, dass das Kraftfahrzeug aus der Querparklücke heraus in Rückwärtsfahrtrichtung bewegt wird bzw. einen Rückwärtsfahrzug durchführt. Das Kraftfahrzeug wird solange entlang der Ausparktrajektorie bewegt, bis es eine Endposition erreicht hat. Wenn die Endposition erreicht ist, wird das semi-autonome Manövrieren des Kraftfahrzeugs bzw. das autonome Einparkmanöver beendet. Nach dem Erreichen der Endposition wird also die Führung des Kraftfahrzeugs wieder an den Fahrer übergeben.

Erfindungsgemäß ist es nun vorgesehen, dass die Endposition als zumindest derartige Position bestimmt wird, dass beim ab der Endposition erfolgenden weiteren Fortbewegen des Kraftfahrzeugs in Vorwärtsfahrtrichtung ein manuelles Führen des Kraftfahrzeugs durch den Fahrzeugführer in die durch die Fahrbahn vorgegebene Fahrtrichtung ohne Rangieren des Kraftfahrzeugs in einem Vorwärtsfahrzug durchgeführt werden kann. Die Fahrbahn kann beispielsweise eine Fahrspur bzw. Richtungsfahrbahn aufweisen, die eine vorbestimmte Fahrtrichtung aufweist. Zunächst wird das Kraftfahrzeug entlang der Ausparktrajektorie in Rückwärtsfahrtrichtung manövriert bzw. zumindest semi-autonom gesteuert. Während des Manövrierens des Kraftfahrzeugs kann die Position des Kraftfahrzeugs fortlaufend mittels Odometrie bestimmt werden. Zudem können mit den Sensoren des Kraftfahrzeugs Objekte, insbesondere die Querparklücke begrenzende Objekte, erfasst werden. Damit kann die relative Lage des Kraftfahrzeugs zu den Objekten fortlaufend bestimmt werden. Wenn die Endposition erreicht ist, wird das zumindest semi-autonome Manövrieren des Kraftfahrzeugs beendet und das Kraftfahrzeug wird von dem Fahrzeugführer rein manuell geführt. Dies bedeutet, dass der Fahrzeugführer das Kraftfahrzeug lenkt sowie das Gaspedal und die Bremse betätigt. Bei dem manuellen Führen steuert der Fahrer das Kraftfahrzeug in Vorwärtsfahrtrichtung so, dass es sich um die Hochachse dreht und dann in Fahrtrichtung der Fahrbahn ausgerichtet ist. Das Manövrieren des Kraftfahrzeugs entlang der Ausparktrajektorie wird beendet, falls sich das Kraftfahrzeug an einer Position befindet, an der es möglich ist, das Kraftfahrzeug in einem Vorwärtsfahrzug ohne Rangieren in der Fahrtrichtung der Fahrbahn auszurichten. Insbesondere ist es vorgesehen, dass beim manuellen Führen des Kraftfahrzeugs ein einziger kollisionsfreier Vorwärtsfahrzug durchgeführt wird, um das Kraftfahrzeug entlang der Fahrtrichtung auszurichten. Das Kraftfahrzeug soll beim manuellen Führen nicht rangiert werden. Dies bedeutet, dass beim manuellen Führen nur der Vorwärtsfahrzug durchgeführt wird und keine weiteren Rückwärtsfahrzüge oder Vorwärtsfahrzüge. Während des Vorwärtsfahrzugs wird das Kraftfahrzeug insbesondere entlang eines Wegs von der Endposition zu der Orientierung in Fahrtrichtung bewegt. Es kann diejenige Position als die Endposition definiert werden, ab welcher das Kraftfahrzeug beim Manövrieren auf der Ausparktrajektorie durch das manuelle Führen des Fahrzeugführers erstmals in einem Vorwärtsfahrzug in Fahrtrichtung ausgerichtet werden kann. Es kann auch eine Position auf der Ausparktrajektorie als die Endposition gewählt werden, die zu einem späteren Zeitpunkt bei der Fahrt auf der Ausparktrajektorie erreicht wird.

Das autonome Ausparkmanöver kann also dann beendet werden, wenn das Kraftfahrzeug von dem Fahrer in einem einzigen Vorwärtsfahrzug - beispielsweise unter Beibehaltung eines vorbestimmten bzw. eingestellten Lenkwinkels - in der Fahrtrichtung ausgerichtet werden kann. Im Vergleich zu bekannten Systemen, bei denen das autonome Ausparkmanöver dann beendet wird, wenn das Kraftfahrzeug bereits in Fahrtrichtung ausgerichtet ist, ergibt sich hier der Vorteil, dass die Kontrolle viel früher an den Fahrer des Kraftfahrzeugs zurückgegeben werden kann. Dies bedeutet insgesamt, dass das Fahrmanöver bzw. das Ausparkmanöver schneller beendet werden kann. Somit verringert sich die Wahrscheinlichkeit, dass der Verkehr auf der Fahrbahn durch das ausparkende Kraftfahrzeug behindert wird oder dass es zu einer Kollision zwischen dem Kraftfahrzeug und einem weiteren Fahrzeug, das sich auf der Fahrbahn bewegt, kommt. Auf diese Weise kann insgesamt das autonome Ausparken des Kraftfahrzeugs aus der Querparklücke sicherer durchgeführt werden.

Insbesondere ist somit auch ein Verfahren zum Bestimmen einer Endposition einer zumindest semi-autonom befahrenen Ausparktrajektorie vorgeschlagen, insbesondere bei einem aus zumindest semi-autonom und manuell gemischtem Ausparkvorgang zum Erreichen der Fahrtrichtung.

Bevorzugt wird zumindest ein Objekt erfasst, welches die Querparklücke begrenzt, und die Endposition wird derart bestimmt, dass das manuelle Führen in einem Vorwärtsfahrzug kollisionsfrei an dem zumindest einen Objekt vorbei möglich ist. Mit Hilfe von Sensoren des Kraftfahrzeugs bzw. des Fahrerassistenzsystems des Kraftfahrzeugs können Objekte erfasst werden, welche die Querparklücke begrenzen. Bei dem Sensor kann es sich beispielsweise um einen Ultraschallsensor, einen Radarsensor, einen Lasersensor oder eine Kamera handeln. Ferner kann es vorgesehen sein, dass die Sensordaten, die mit den Sensoren bereitgestellt werden, von der Steuereinrichtung des Kraftfahrzeugs ausgewertet werden. Bei diesen Objekten kann es sich insbesondere um geparkte Fahrzeuge handeln, die auf benachbarten Querparklücken abgestellt sind. Hierbei kann die Endposition derart bestimmt werden, dass bei dem manuellen Führen des Kraftfahrzeugs durch den Fahrer keine Kollision zwischen dem Kraftfahrzeug und dem zumindest einen Objekt, das die Querparklücke begrenzt, erfolgt. Mit anderen Worten wird das Kraftfahrzeug entlang der Ausparktrajektorie soweit zurückgesetzt, dass es kollisionsfrei an den Objekten, die die Querparklücke begrenzen, vorbei gelenkt werden kann. Dabei kann die Endposition unterschiedlich gewählt werden, je nachdem, ob Objekte vorhanden sind, die die Querparklücke begrenzen oder nicht. Somit kann zuverlässig verhindert werden, dass das Kraftfahrzeug oder die Objekte, die die Querparklücke begrenzen, beschädigt werden.

In einer weiteren Ausführungsform wird zum Erfassen des zumindest einen Objekts während des Manövrierens des Kraftfahrzeugs entlang der Ausparktrajektorie fortlaufend ein Abstand zwischen dem zumindest einen Objekt und dem Kraftfahrzeug bestimmt. Dies ermöglicht es, den Abstand zwischen dem Kraftfahrzeug und dem Objekt bzw. die relative Lage zwischen dem Kraftfahrzeug und dem Objekt fortlaufend korrigieren zu können. So kann beispielsweise mit Hilfe von Ultraschallsensoren, die verteilt an dem Kraftfahrzeug angeordnet sind, fortlaufend der Abstand zwischen dem Kraftfahrzeug und dem Objekt bestimmt werden. Hierbei wird der Aspekt genutzt, dass das Kraftfahrzeug während des Manövrierens entlang der Ausparktrajektorie relativ zu den Objekten bewegt wird, die die Parklücke begrenzen. Somit können während des Ausparkvorgangs genauere Informationen zu den Objekten gewonnen werden. Dies ermöglicht insgesamt eine präzisere Bestimmung der Endposition.

Weiterhin ist es vorteilhaft, wenn die Endposition derart bestimmt wird, dass das manuelle Führen des Kraftfahrzeugs in einem vorbestimmten Sicherheitsabstand in einem Vorwärtsfahrzug an dem zumindest einen Objekt vorbei möglich ist. Grundsätzlich ist es bekannt, beim autonomen Manövrieren eines Kraftfahrzeugs an einem Objekt bzw. Hindernis vorbei einen entsprechenden Sicherheitsabstand zu berücksichtigen, um Kollisionen zwischen dem Kraftfahrzeug und dem Objekt in Folge von Messungenauigkeiten auszuschließen. Vorliegend ist es vorgesehen, dass ein zusätzlicher Sicherheitsabstand berücksichtigt wird, in welchem das Kraftfahrzeug bzw. die Außenfläche der Karosserie des Kraftfahrzeugs an den geparkten Fahrzeugen vorbeigeführt werden soll. Somit kann berücksichtigt werden, dass der Fahrer das Kraftfahrzeug bei dem manuellen Führen nicht exakt mit einem vorbestimmten Lenkwinkel lenkt. Es kann auch berücksichtigt werden, dass beim Erreichen der Endposition ein Lenkwinkel eingestellt wird, welcher den kollisionsfreien Vorwärtsfahrzug ermöglicht. Durch den zusätzlichen Sicherheitsabstand kann berücksichtigt werden, dass der Fahrer bei dem manuellen Führen des Kraftfahrzeugs das Lenkrad nicht hält oder eine geringe Lenkbewegung durchführt. Damit kann auch berücksichtigt werden, dass der Fahrer das Kraftfahrzeug nicht mit einer vorbestimmten Geschwindigkeit bewegt. Durch den zusätzlichen Sicherheitsabstand kann sicher und kollisionsfrei an den Objekten vorbeigeführt werden, auch wenn der Fahrer nicht exakt den vorbestimmten oder eingestellten Lenkwinkel beibehält.

In einer weiteren Ausgestaltung wird die Endposition unter der Annahme bestimmt, dass beim manuellen Führen des Kraftfahrzeugs ein vorbestimmter Lenkwinkel, insbesondere ein maximaler Lenkwinkel, eingestellt wird. Dieser eingestellte Lenkwinkel ist insbesondere so gewählt, dass der Fahrer ohne Änderung des eingestellten Lenkwinkels den kollisionsfreien Vorwärtsfahrzug durchführen kann. Ferner kann beispielsweise ein Fahrschlauch bestimmt werden, der die zukünftige Bewegung des Kraftfahrzeugs bei dem manuellen Führen während des Vorwärtsfahrzugs beschreibt. Hier kann die Endposition derart bestimmt werden, dass dieser Fahrschlauch an den Objekten, die die Parklücke begrenzen, vorbeiführt. Dieser Fahrschlauch ist abhängig von dem Lenkwinkel, den das Fahrerassistenzsystem des Kraftfahrzeugs an der Endposition vorgeben kann. Insbesondere kann die Endposition unter der Annahme bestimmt werden, dass ein maximaler Lenkwinkel gewählt wird. Die Endposition wird also so bestimmt, dass der Fahrer das Kraftfahrzeug auf die Fahrspur der Fahrbahn bewegen kann, wenn er das Lenkrad vollständig einschlägt. Somit kann einerseits erreicht werden, dass das Kraftfahrzeug nicht oder nicht zu weit auf die Gegenfahrbahn bewegt wird. Ferner kann zudem sichergestellt werden, dass das Kraftfahrzeug in dem einzigen Vorwärtsfahrzug auf die gewünschte Fahrspur bewegt werden kann.

Weiterhin ist es vorteilhaft, wenn der vorbestimmte Lenkwinkel an der Endposition mittels eines Fahrerassistenzsystems des Kraftfahrzeugs eingestellt wird. Wenn die Endposition erreicht wird, kann das Fahrerassistenzsystem nochmals in die Lenkung des Kraftfahrzeugs eingreifen und die lenkbaren Räder des Kraftfahrzeugs derart ausrichten, dass die Lenkung den vorbestimmten Lenkwinkel aufweist. Dabei kann es vorgesehen sein, dass das Kraftfahrzeug an der Endposition angehalten wird und die Räder im Stand des Kraftfahrzeugs mittels des Fahrerassistenzsystems eingeschlagen werden. Somit ist es nicht erforderlich, das Kraftfahrzeug möglichst weit auf die Gegenfahrbahn zu bewegen. Ferner eignet sich dies, wenn die Fahrbahn durch entsprechende Begrenzungselemente begrenzt ist.

Erfindungsgemäß wird nach dem Erreichen der Endposition ein Vorwärtsgang mittels eines Fahrerassistenzsystems eingelegt oder ein Hinweis zum Einlegen des Vorwärtsgangs wird an den Fahrzeugführer des Kraftfahrzeugs ausgegeben. Nachdem die Endposition erreicht ist, kann das Fahrerassistenzsystem selbst von dem Rückwärtsgang in den Vorwärtsgang wechseln. Von dem Fahrerassistenzsystem kann also ein Gangwechsel durchgeführt werden. Dies ermöglicht es dem Fahrzeugführer das Kraftfahrzeug direkt und schnell zu übernehmen. Es kann auch vorgesehen sein, dass an den Fahrer des Kraftfahrzeugs eine entsprechende Ausgabe ausgegeben wird. Diese Ausgabe kann beispielsweise optisch, akustisch oder haptisch ausgegeben werden. Grundsätzlich kann diese Ausgabe den Fahrzeugführer darauf hinweisen, dass er den Vorwärtsgang einlegen soll. Die Ausgabe kann ferner die Information beinhalten, dass das automatische bzw. autonome Ausparkmanöver nun beendet ist. Somit kann eine sichere Übergabe von dem Fahrerassistenzsystem an den Fahrzeugführer des Kraftfahrzeugs erfolgen.

Es ist insbesondere vorgesehen, dass das zumindest semi-autonome Manövrieren des Kraftfahrzeugs beendet wird bzw. die Führung des Kraftfahrzeugs an den Fahrer übergeben wird, falls die Endposition erreicht ist, der vorbestimmte Lenkwinkel von dem Fahrerassistenzsystem eingestellt wurde und der Vorwärtsgang eingelegt wurde. Dabei kann der Vorwärtsgang von dem Fahrer oder dem Fahrerassistenzsystem eingelegt worden sein.

Weiterhin ist es vorteilhaft, wenn ein Begrenzungselement erfasst wird, welches die Fahrbahn auf einer der Querparklücke gegenüberliegenden Seite begrenzt, und die Endposition in Abhängigkeit von dem erfassten Begrenzungselement bestimmt wird. Ein solches Begrenzungselement kann beispielsweise eine Wand, eine Leitplanke, eine Pflanze, ein Bordstein, ein geparktes Fahrzeug oder dergleichen sein. Das Begrenzungselement begrenzt die Fahrbahn bevorzugt auf einer der Querparklücke gegenüberliegenden Seite. Während des Ausparkvorgangs kann mit Hilfe der Sensoren überprüft werden, ob ein derartiges Begrenzungselement vorhanden ist oder nicht. In Abhängigkeit davon kann dann die Endposition bestimmt werden. Grundsätzlich kann es auch vorgesehen sein, dass ein Begrenzungselement erfasst wird, welches eine Fahrspur bzw. eine Richtungsfahrbahn von einer anderen Fahrspur bzw. einer anderen Richtungsfahrbahn abtrennt. Somit kann die Endposition in Abhängigkeit von der Ausgestaltung der Fahrbahn präzise bestimmt werden.

Falls es aufgrund des Vorhandensein des Begrenzungselements notwendig ist, werden zum Manövrieren des Kraftfahrzeugs entlang der Ausparktrajektorie ein Vorwärtsfahrzug und ein weiterer Rückwärtsfahrzug durchgeführt. Wenn beispielsweise bei dem ersten Rückwärtsfahrzug, mit dem das Kraftfahrzeug aus der Querparklücke herausbewegt wird, keine Endposition erreicht werden kann, kann ein Vorwärtsfahrzug und im Anschluss daran ein weiterer Rückwärtsfahrzug durchgeführt werden. Das Durchführen des Vorwärtsfahrzugs und des darauf folgenden Rückwärtsfahrzeugs kann auch mehrfach durchgeführt werden. Es kann also vorgesehen sein, dass das Kraftfahrzeug solange vorwärts und rückwärts bewegt wird, bis der Endpunkt erreicht werden kann. Dies ist beispielsweise der Fall, wenn die Fahrbahn oder die an die Querparklücke angrenzende Fahrbahn durch ein Begrenzungselement begrenzt ist.

Ein erfindungsgemäßes Fahrerassistenzsystem für ein Kraftfahrzeug ist zum Durchführen eines erfindungsgemäßen Verfahrens ausgelegt. Das Fahrerassistenzsystem kann beispielsweise eine Steuereinrichtung bzw. ein elektronisches Steuergerät aufweisen, mit dem während des Ausparkmanövers Steuersignale an die Lenkung des Kraftfahrzeugs und gegebenenfalls an die Bremsanlage und/oder den Antriebsmotor ausgegeben werden. Somit kann mit Hilfe des Fahrerassistenzsystems ein autonomes Ausparkmanöver durchgeführt werden.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Es sind auch Ausführungen und Merkmalskombinationen als offenbart anzusehen, die somit nicht alle Merkmale eines ursprünglich formulierten unabhängigen Anspruchs aufweisen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem aufweist;
- Fig. 2: das Kraftfahrzeug, welches aus einer Querparklücke rückwärts ausgeparkt wird gemäß einer ersten Ausführungsform; und
- Fig. 3-5: einzelne Schritte des Ausparkens des Kraftfahrzeugs aus der Querparklücke gemäß einer weiteren Ausführungsform.

In den Figuren werden gleiche und funktionsgleiche Elemente mit den gleichen Bezugszeichen versehen.

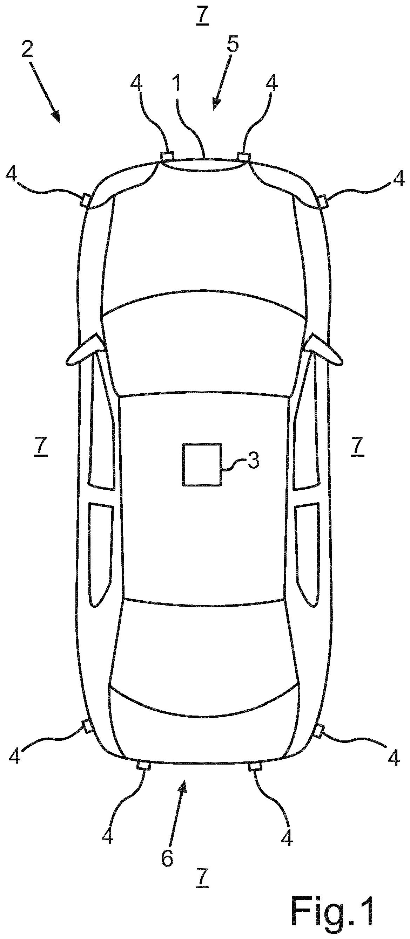

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2, welches dazu dient, einen Fahrer des Kraftfahrzeugs 1 beim Führen des Kraftfahrzeugs 1 zu unterstützen. Das Fahrerassistenzsystem 2 umfasst wiederum eine Steuereinrichtung 3, die beispielsweise durch ein elektronisches Steuergerät (ECU - Electronic Control Unit) des Kraftfahrzeugs 1 gebildet sein kann.

Darüber hinaus umfasst das Fahrerassistenzsystem 2 zumindest einen Sensor 4. In dem vorliegenden Ausführungsbeispiel umfasst das Fahrerassistenzsystem 2 acht Sensoren 4, die beispielsweise als Ultraschallsensoren ausgebildet sind. Die sind vier Sensoren 4 in einem Frontbereich 5 und vier Sensoren 4 in einem Heckbereich 6 des Kraftfahrzeugs 1 angeordnet. Mit den Sensoren 4 können Objekte bzw. Hindernisse in einem Umgebungsbereich 7 des Kraftfahrzeugs 1 erfasst werden. Die Sensoren 4 sind zur Datenübertragung mit der Steuereinrichtung 3 verbunden. Eine entsprechende Datenleitung ist vorliegend der Übersichtlichkeit halber nicht dargestellt. Somit kann die Steuereinrichtung 3 die Sensordaten, die mit den Sensoren 4 bereitgestellt werden, entsprechend auswerten. Somit können beispielsweise die Objekte oder Hindernisse in dem Umgebungsbereich 7 erkannt werden.

Das Fahrerassistenzsystem 2 ist zudem dazu ausgebildet, eine Bewegung des Kraftfahrzeugs 1 fortlaufend mittels Odometrie zu erfassen. So kann die Steuereinrichtung 3 beispielsweise auch Daten von einem Geschwindigkeitssensor und/oder einem Lenkwinkelsensor empfangen. Darüber hinaus ist die Steuereinrichtung 3 dazu ausgelegt, entsprechende Steuersignale an die Lenkung des Kraftfahrzeugs 1 auszugeben. Somit kann ein Eingriff in die Lenkung des Kraftfahrzeugs mithilfe des Fahrerassistenzsystems 2 erfolgen. Dies ermöglicht ein semi-autonomes Manövrieren des Kraftfahrzeugs 1.

Mit Hilfe des Fahrerassistenzsystems 2 soll das Kraftfahrzeug 1 während eines Ausparkvorgangs aus einer Querparklücke 8 zumindest semi-autonom manövriert werden. Vorliegend wurde das Kraftfahrzeug 1 vorwärts in die Querparklücke 8 eingeparkt. Somit wird das Kraftfahrzeug 1 beim Ausparken zunächst in Rückwärtsfahrtrichtung bewegt. Vorliegend wird das Kraftfahrzeug 1 entlang einer Ausparktrajektorie 9 manövriert. Dabei wird das Kraftfahrzeug 1 aus der Querparklücke 8 heraus auf eine Fahrbahn 10 bewegt. Die Fahrbahn 10 kann beispielsweise zwei Fahrspuren bzw. zwei Richtungsfahrbahnen aufweisen die hier nicht näher dargestellt sind.

Während des Manövrierens des Kraftfahrzeugs 1 entlang der Ausparktrajektorie 9 wird mit den Sensoren 4 der Umgebungsbereich 7 und insbesondere Objekte 11 erfasst, welche die Querparklücke 8 begrenzen. Bei den Objekten 11 kann es sich insbesondere um geparkte Fahrzeuge handeln, die auf benachbarten Querparklücken abgestellt sind. Während des Ausparkens des Kraftfahrzeugs 1 kann fortlaufend der Abstand zwischen dem Kraftfahrzeug 1 und den jeweiligen Objekten 11 erfasst werden. Auf diese Weise kann die relative Lage des Kraftfahrzeugs 1 zu den Objekten 11 bestimmt werden. Zudem kann die aktuelle Position des Kraftfahrzeugs 1 mittels Odometrie bestimmt werden. Darüber hinaus ist es vorgesehen, dass ein Begrenzungselement 12 mittels der Sensoren 4 erfasst wird, welches die Fahrbahn 10 begrenzt. Bei dem Begrenzungselement 12 kann es sich beispielsweise um eine Wand handeln.

Es ist nun vorgesehen, dass das Kraftfahrzeug 1 solange auf der Ausparktrajektorie 9 bewegt wird, bis es eine Endposition E erreicht hat. Dabei wird die Endposition E derart bestimmt, dass diese diejenige Position beschreibt, ab welcher das Kraftfahrzeug 1 manuell durch den Fahrer in eine Fahrtrichtung 13 der Fahrbahn 10 bzw. einer Fahrspur der Fahrbahn 10 bewegt werden kann. Die Fahrtrichtung 13 ist vorgegeben und verläuft senkrecht zu einer Haupterstreckungsrichtung der Querparklücke 8. Dabei kann es vorgesehen sein, dass das Kraftfahrzeug 1 bis zu der Endposition E zumindest semi-autonom manövriert wird und das Kraftfahrzeug 1 nach dem Erreichen der Endposition E von dem Fahrer des Kraftfahrzeugs 1 manuell geführt wird. Dabei wird die Endposition E so bestimmt, dass das Kraftfahrzeug 1 ausgehend von der Endposition E in einem einzigen Vorwärtsfahrzug entlang der Fahrtrichtung 13 ausgerichtet werden kann. Hierbei ist es vorgesehen, dass während des Bewegens des Kraftfahrzeugs 1 entlang der Ausparktrajektorie 9 fortlaufend ein Fahrschlauch 14 bestimmt wird, der die Bewegung des Kraftfahrzeugs 1 bei dem Vorwärtsfahrzug beschreibt.

Die Endposition E wird zudem in Abhängigkeit von den Objekten 11 bestimmt, die die Querparklücke 8 begrenzen. Insbesondere wird die Endposition E so bestimmt, dass das Kraftfahrzeug 1 bei dem Vorwärtsfahrzug, bei dem es von dem Fahrer des Kraftfahrzeugs 1 manuell gelenkt wird, kollisionsfrei an den Objekten 11 vorbeibewegt werden kann. Hierbei kann ein zusätzlicher Sicherheitsabstand bestimmt werden, in dem das Kraftfahrzeug 1 an zumindest einem der Objekte 11 vorbeibewegt wird. Ferner kann die Endposition E so bestimmt werden, dass das Kraftfahrzeug 1 in dem Vorwärtsfahrzug unter Einstellung eines vorbestimmten Lenkwinkels, insbesondere unter Einstellung eines maximalen Lenkwinkels, an dem zumindest einen Objekt 11 vorbeigeführt werden kann. Die Führung des Kraftfahrzeugs 1 wird also von dem Fahrerassistenzsystem 2 an den Fahrer des Kraftfahrzeugs 1 übergeben, sobald der Vorwärtsfahrzug unter Einstellung des maximalen bzw. des vorbestimmten Lenkwinkels kollisionsfrei an dem zumindest einen Objekt 11 vorbeiführt. Dies bedeutet, dass das Kraftfahrzeug 1 im Moment der Deaktivierung des Fahrerassistenzsystems nicht entlang der vorbestimmten Fahrtrichtung 13 ausgerichtet ist, sondern noch einen relativ großen Winkel zur finalen Fahrtrichtung 13 aufweist. Der Vorteil dabei ist, dass die Kontrolle viel früher an den Fahrer des Kraftfahrzeugs 1 zurückgegeben wird und das Manöver somit schneller beendet werden kann.

Falls die Endposition E erreicht ist, kann es ferner vorgesehen sein, dass durch das Fahrerassistenzsystem 2 der vorbestimmte Lenkwinkel bzw. der maximale Lenkwinkel eingestellt wird. Hierzu kann mit dem Fahrerassistenzsystem 2 ein Eingriff in die Lenkung durchgeführt werden und somit die lenkbaren Räder 15 des Kraftfahrzeugs 1 entsprechend ausgelenkt werden. Es wird auch gemäß der Erfindung vorgesehen, dass nach Erreichen der Endposition mittels des Fahrerassistenzsystems 2 der Vorwärtsgang eingelegt wird. Alternativ dazu kann es auch vorgesehen sein, dass eine Ausgabe an den Fahrer ausgegeben wird, die ihn darauf hinweist, dass er den Vorwärtsgang einlegen soll. Falls die Endposition E erreicht ist, der vorbestimmte Lenkwinkel eingestellt ist und der Vorwärtsgang eingelegt ist, kann das autonome Ausparkmanöver beendet werden und an den Fahrer übergeben werden.

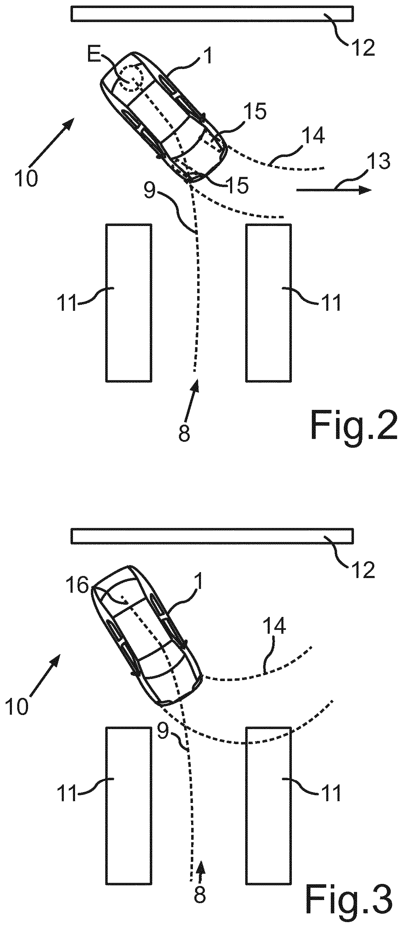

Fig. 3 zeigt das Kraftfahrzeug 1 in einer weiteren Verkehrssituation. Auch hier wird das Kraftfahrzeug 1 aus der Querparklücke 8 heraus entlang der Ausparktrajektorie 9 bewegt. Aufgrund der Anordnung des Parkbegrenzungselements 12 kann aber die Endposition E nicht erreicht werden. In diesem Fall würde sich die Endposition E hinter dem Begrenzungselement 12 bzw. der Wand befinden. Wenn das Kraftfahrzeug 1 ausgehend von der in Fig. 3 dargestellten Position in dem Vorwärtsfahrzug unter Einstellung des maximalen Lenkwinkels bewegt würde, würde es mit dem Objekt 11 kollidieren.

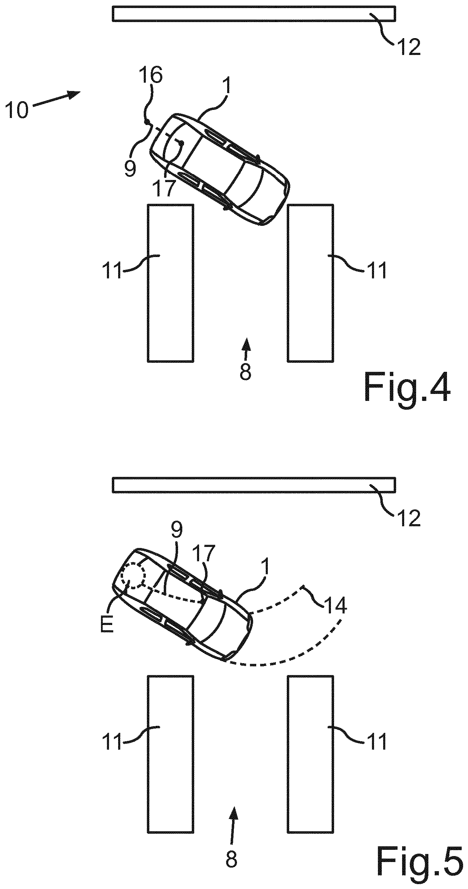

In diesem Fall ist es vorgesehen, dass das Kraftfahrzeug 1 ausgehend von deinem Zwischenpunkt 16 der Ausparktrajektorie 9 einen Vorwärtsfahrzug durchführt. Dies ist in Fig. 4 dargestellt. Hierbei wird das Kraftfahrzeug 1 bis zu einem vorbestimmten Mindestabstand an das Objekt 11 heranbewegt, so dass eine weitere Zwischenposition 17 erreicht wird. Wie aus Fig. 5 zu entnehmen ist, wird das Kraftfahrzeug lausgehend von dieser weiteren Zwischenposition 17 in einem weiteren Rückwärtsfahrzug entlang der Ausparktrajektorie 9 in die Endposition E bewegt. Ausgehend von dieser Endposition E kann dann das Kraftfahrzeug 1 kollisionsfrei an dem Objekt 11 vorbeibewegt werden.

## Patentansprüche

1. Verfahren zum Ausparken eines Kraftfahrzeugs (1) aus einer Querparklücke (8), bei welchem das Kraftfahrzeug (1) entlang einer Ausparktrajektorie (9) zumindest semi-autonom aus der Querparklücke (8) heraus auf eine an die Querparklücke (8) angrenzende Fahrbahn (10) manövriert wird, wobei bei diesem semi-autonomen Manövrieren des Kraftfahrzeugs (1) entlang der Ausparktrajektorie (9) zumindest ein Rückwärtsfahrzug durchgeführt wird, eine Endposition (E) bestimmt wird und das semi-autonome Manövrieren des Kraftfahrzeugs (1) entlang der Ausparktrajektorie (9) an der Endposition (E) beendet wird,
wobei die Endposition (E) als zumindest derartige Position bestimmt wird, dass beim ab der Endposition (E) erfolgenden weiteren Fortbewegen des Kraftfahrzeugs (1) ein manuelles Führen des Kraftfahrzeugs (1) durch einen Fahrzeugführer in eine durch die Fahrbahn (10) vorgegebene Fahrtrichtung (13) ohne Rangieren des Kraftfahrzeugs (1) in einem Vorwärtsfahrzug durchgeführt werden kann, **dadurch gekennzeichnet, dass** nach einem Erreichen der Endposition (E) ein Vorwärtsgang mittels eines Fahrerassistenzsystems (2) eingelegt wird oder ein Hinweis zum Einlegen des Vorwärtsgangs an den Fahrzeugführer des Kraftfahrzeugs (1) ausgegeben wird.

2. Verfahren nach Anspruch 1,
**dadurch gekennzeichnet, dass**
zumindest ein Objekt (11) erfasst wird, welches die Querparklücke (8) begrenzt, und die Endposition (E) derart bestimmt wird, dass das manuelle Führen in einem Vorwärtsfahrzug kollisionsfrei an dem zumindest einen Objekt (11) vorbei möglich ist.

3. Verfahren nach Anspruch 2,
**dadurch gekennzeichnet, dass**
zum Erfassen des zumindest einen Objekts (11) während des Manövrierens des Kraftfahrzeugs (1) entlang der Ausparktrajektorie (9) fortlaufend ein Abstand zwischen dem zumindest einen Objekt (11) und dem Kraftfahrzeug (1) bestimmt wird.

4. Verfahren nach Anspruch 2 oder 3,
**dadurch gekennzeichnet, dass**
die Endposition (E) derart bestimmt wird, dass das manuelle Führen des Kraftfahrzeugs (1) in einem vorbestimmten Sicherheitsabstand in einem Vorwärtsfahrzug an dem zumindest einen Objekt (11) vorbei möglich ist.

5. Verfahren nach einem der vorhergehenden Ansprüche,
**dadurch gekennzeichnet, dass**
die Endposition (E) unter der Annahme bestimmt wird, dass beim manuellen Führen des Kraftfahrzeugs (1) ein vorbestimmter Lenkwinkel, insbesondere ein maximaler Lenkwinkel, eingestellt wird.

6. Verfahren nach Anspruch 5,
**dadurch gekennzeichnet, dass**
der vorbestimmte Lenkwinkel an der Endposition (E) mittels des Fahrerassistenzsystems (2) des Kraftfahrzeugs (1) eingestellt wird.

7. Verfahren nach einem der vorhergehenden Ansprüche,
**dadurch gekennzeichnet, dass**
ein Begrenzungselement (12) erfasst wird, welches die Fahrbahn (10) auf einer der Querparklücke (8) gegenüberliegenden Seite begrenzt, und die Endposition (E) in Abhängigkeit von dem erfassten Begrenzungselement (12) bestimmt wird.

8. Verfahren nach einem der vorhergehenden Ansprüche,
**dadurch gekennzeichnet, dass**
zum Manövrieren des Kraftfahrzeugs (1) entlang der Ausparktrajektorie (9) ein Vorwärtsfahrzug und ein weiterer Rückwärtsfahrzug durchgeführt werden.

9. Fahrerassistenzsystem (2) für ein Kraftfahrzeug (1), welches zum Durchführen eines Verfahrens nach einem der vorhergehenden Ansprüche ausgelegt ist.

10. Kraftfahrzeug (1) mit einem Fahrerassistenzsystem (2) nach Anspruch 9.

## Claims

1. Method for moving a motor vehicle (1) out of a perpendicular parking space (8), in which the motor vehicle (1) is manoeuvred along an exiting trajectory (9) at least semi-autonomously out of the perpendicular parking space (8) onto a road (10) adjacent to the perpendicular parking space (8), wherein, during this semi-autonomous manoeuvring of the motor vehicle (1) along the exiting trajectory (9), at least one reversing movement is carried out, an end position (E) is determined and the semi-autonomous manoeuvring of the motor vehicle (1) along the exiting trajectory (9) is ended at the end position (E),
wherein the end position (E) is determined as at least a position such that, in the event of further moving of the motor vehicle (1) being carried out from the end position (E), manual driving of the motor vehicle (1) in a direction of travel (13) predetermined by the road (10) can be carried out by a driver of the vehicle without manoeuvring the motor vehicle (1) in a forward movement, **characterized in that**, after reaching the end position (E), a forward gear is engaged by means of a driver assistance system (2) or an instruction to engage the forward gear is issued to the driver of the motor vehicle (1) .

2. Method according to Claim 1,
**characterized in that**
at least one object (11) that bounds the perpendicular parking space (8) is detected, and the end position (E) is determined such that manual driving in a forward movement past the at least one object (11) without collisions is possible.

3. Method according to Claim 2,
**characterized in that**
a distance between the at least one object (11) and the motor vehicle (1) is continuously determined for detecting the at least one object (11) during the manoeuvring of the motor vehicle (1) along the exiting trajectory (9) .

4. Method according to Claim 2 or 3,
**characterized in that**
the end position (E) is determined in such a way that manual driving of the motor vehicle (1) past the at least one object (11) at a predetermined safety distance in a forward movement is possible.

5. Method according to one of the preceding claims, **characterized in that**
the end position (E) is determined on the assumption that a predetermined steering angle, in particular a maximum steering angle, is set during manual driving of the motor vehicle (1).

6. Method according to Claim 5,
**characterized in that**
the predetermined steering angle at the end position (E) is set by means of the driver assistance system (2) of the motor vehicle (1).

7. Method according to one of the preceding claims, **characterized in that**
a bounding element (12) that bounds the road (10) on a side opposite the perpendicular parking space (8) is detected, and the end position (E) is determined depending on the detected bounding element (12).

8. Method according to one of the preceding claims, **characterized in that**
a forward movement and a further reversing movement are carried out for manoeuvring the motor vehicle (1) along the exiting trajectory (9).

9. Driver assistance system (2) for a motor vehicle (1) that is designed to carry out a method according to one of the preceding claims.

10. Motor vehicle (1) with a driver assistance system (2) according to Claim 9.

## Revendications

1. Procédé de sortie de stationnement d'un véhicule automobile (1) d'une place de stationnement en bataille (8), procédé dans lequel le véhicule automobile (1) est manœuvré au moins de manière semi-autonome le long d'une trajectoire de sortie de stationnement (9) de la place de stationnement en bataille (8) jusque sur une voie de roulement (10) adjacente à la place de stationnement en bataille (8), lors de cette manœuvre semi-autonome du véhicule automobile (1) le long de la trajectoire de sortie de stationnement (9) au moins une manœuvre de marche arrière étant effectuée, une position finale (E) étant déterminée et la manœuvre semi-autonome du véhicule automobile (1) le long de la trajectoire de sortie de stationnement (9) à la position finale (E) étant terminée,
la position finale (E) étant déterminée comme étant au moins une position telle que, lorsque le véhicule automobile (1) poursuit son déplacement depuis la position finale (E), un guidage manuel du véhicule automobile (1) pouvant être effectué en marche avant sans manœuvrer le véhicule automobile (1) par un conducteur dans un sens de roulement (13) spécifié par la voie de roulement (10), **caractérisé en ce que**, une fois la position finale (E) atteinte, une vitesse avant est engagée au moyen d'un système d'aide à la conduite (2) ou un message d'engagement de la marche avant est délivré au conducteur du véhicule automobile (1).

2. Procédé selon la revendication 1,
**caractérisé en ce que**
au moins un objet (11) est détecté qui délimite la place de stationnement en bataille (8) et la position finale (E) est déterminée de manière à ce que la conduite manuelle en marche avant sans collision devant au moins un objet (11) soit possible.

3. Procédé selon la revendication 2,
**caractérisé en ce que**
une distance entre l'au moins un objet (11) et le véhicule automobile (1) est déterminée en permanence pour détecter l'au moins un objet (11) lors de la manœuvre du véhicule automobile (1) le long de la trajectoire de sortie de stationnement (9).

4. Procédé selon la revendication 2 ou 3,
**caractérisé en ce que**
la position finale (E) est déterminée de manière à ce que le guidage manuel du véhicule automobile (1) à une distance de sécurité prédéterminée en marche avant devant l'au moins un objet (11) soit possible.

5. Procédé selon l'une des revendications précédentes, **caractérisé en ce que**
l'on détermine la position finale (E) en supposant qu'un angle de braquage prédéterminé, en particulier un angle de braquage maximal, est réglé lors du guidage manuel du véhicule automobile (1).

6. Procédé selon la revendication 5,
**caractérisé en ce que**
l'angle de braquage prédéterminé est réglé à la position finale (E) au moyen du système d'assistance à la conduite (2) du véhicule automobile (1).

7. Procédé selon l'une des revendications précédentes, **caractérisé en ce que**
un élément de délimitation (12) est détecté qui délimite la voie de roulement (10) sur un côté opposé à la place de stationnement en bataille (8), et la position finale (E) est déterminée en fonction de l'élément de délimitation (12) détecté.

8. Procédé selon l'une des revendications précédentes, **caractérisé en ce que**
pour manœuvrer le véhicule automobile (1) le long de la trajectoire de sortie de stationnement (9), une marche avant et une autre marche arrière sont effectuées.

9. Système d'assistance à la conduite (2) destiné à un véhicule automobile (1), lequel système est conçu pour mettre en œuvre un procédé selon l'une des revendications précédentes.

10. Véhicule automobile (1) comprenant un système d'assistance à la conduite (2) selon la revendication 9.
